(19) Europäisches Patentamt
European Patent Office
Office européen des brevets

(11) **EP 4 071 729 A2**

(12) **EUROPEAN PATENT APPLICATION**


(43) Date of publication:
**12.10.2022 Bulletin 2022/41**

(21) Application number: **22191209.0**

(22) Date of filing: **19.08.2022**

(51) International Patent Classification (IPC):
***G06V 20/70*** *(2022.01)*

(52) Cooperative Patent Classification (CPC):
**G06V 20/70**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.11.2021 CN 202111306870**



(71) Applicant: **Beijing Baidu Netcom Science Technology Co., Ltd.**
**Beijing 100085 (CN)**

(72) Inventors:
- **SUN, Yipeng**
  **Beijing, 100085 (CN)**
- **AN, Rongqiao**
  **Beijing, 100085 (CN)**
- **WEI, Xiang**
  **Beijing, 100085 (CN)**
- **WANG, Longchao**
  **Beijing, 100085 (CN)**
- **YAO, Kun**
  **Beijing, 100085 (CN)**
- **HAN, Junyu**
  **Beijing, 100085 (CN)**
- **LIU, Jingtuo**
  **Beijing, 100085 (CN)**
- **DING, Errui**
  **Beijing, 100085 (CN)**

(74) Representative: **Lucke, Andreas**
**Boehmert & Boehmert**
**Anwaltspartnerschaft mbB**
**Pettenkoferstrasse 22**
**80336 München (DE)**


# (54) METHOD AND APPARATUS FOR TRAINING IMAGE RECOGNITION MODEL BASED ON SEMANTIC ENHANCEMENT


(57) Embodiments of the present disclosure provide a method and apparatus for training an image recognition model based on a semantic enhancement, a method and apparatus for recognizing an image, an electronic device, and a computer readable storage medium. Embodiments of the present disclosure relate to the field of artificial intelligence technology, and specifically to the fields of computer vision and deep learning technologies, and can be applied to scenarios such as an image processing scenario and an image recognition scenario. The method for training an image recognition model based on a semantic enhancement comprises: extracting, from an inputted first image being unannotated and having no textual description, a first feature representation of the first image; calculating a first loss function based on the first feature representation; extracting, from an inputted second image being unannotated and having an original textual description, a second feature representation of the second image; calculating a second loss function based on the second feature representation; and training an image recognition model based on a fusion of the first loss function and the second loss function. In this way, the training can be more effectively performed on the image recognition model at a low cost.


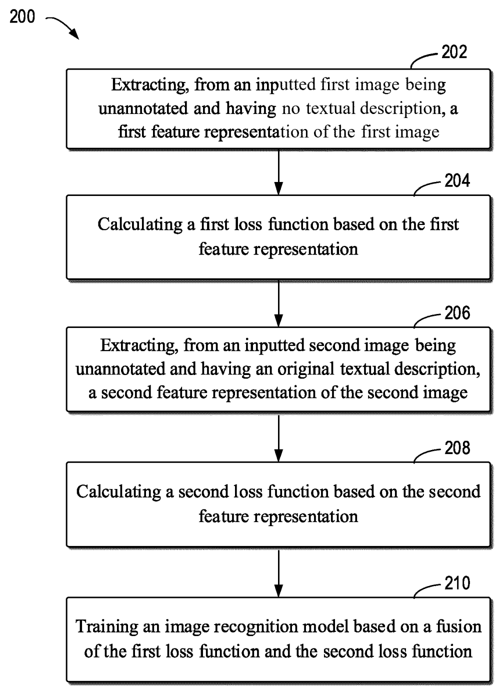


Fig. 2

EP 4 071 729 A2

## Description

TECHNICAL FIELD

Embodiments of the present disclosure mainly relate to the field of artificial intelligence technology, and specifically to the fields of computer vision and deep learning technologies, and the embodiments of the present disclosure can be applied to scenarios such as an image processing scenario and an image recognition scenario. More specifically, the embodiments of the present disclosure relate to a method and apparatus for training an image recognition model based on a semantic enhancement, a method and apparatus for recognizing an image, an electronic device, and a computer readable storage medium.

BACKGROUND

In recent years, with the development of computer software and hardware technology, the fields of artificial intelligence and machine learning have also made a great progress. The technology is also widely applied in application scenarios such as image processing scenarios and image recognition scenarios. In this regard, the core problem is how to train related models more efficiently and accurately at lower costs.

Current training approaches mainly include supervised training and unsupervised training. Specifically, in the field of visual images, the supervised training requires to use a large number of images with annotation data as inputted images. However, the process of annotating images requires a lot of labor costs, and it is very expensive to purchase such images with annotations. In contrast, although the unsupervised training can save the annotation costs, the lack of semantic supervision information leads to the poor performance of trained models in solving practical downstream tasks (e.g., image classifications and object detections).

SUMMARY

According to example embodiments of the present disclosure, a scheme of training an image recognition model based on a semantic enhancement is provided.

In a first aspect of the present disclosure, a method for training an image recognition model based on a semantic enhancement is provided. The method includes: extracting, from an inputted first image being unannotated and having no textual description, a first feature representation of the first image; calculating a first loss function based on the first feature representation; extracting, from an inputted second image being unannotated and having an original textual description, a second feature representation of the second image; calculating a second loss function based on the second feature representation; and training an image recognition model based on a fusion of the first loss function and the second loss function.

In a second aspect of the present disclosure, a method for recognizing an image is provided. The method includes: acquiring a to-be-recognized image; and recognizing the to-be-recognized image based on an image recognition model, where the image recognition model is obtained based on the method for training an image recognition model based on a semantic enhancement according to the first aspect of the present disclosure.

In a third aspect of the present disclosure, an apparatus for training an image recognition model based on a semantic enhancement is provided. The apparatus includes: a first feature extracting module configured to extract, from an inputted first image being unannotated and having no textual description, a first feature representation of the first image; a first calculating module configured to calculate a first loss function based on the first feature representation; a second feature extracting module configured to extract, from an inputted second image being unannotated and having an original textual description, a second feature representation of the second image; a second calculating module configured to calculate a second loss function based on the second feature representation; and a fusion training module configured to train an image recognition model based on a fusion of the first loss function and the second loss function.

In a fourth aspect of the present disclosure, an apparatus for recognizing an image is provided. The apparatus includes: an image acquiring module configured to acquire a to-be-recognized image; and an image recognizing module configured to recognize the to-be-recognized image based on an image recognition model, where the image recognition model is obtained based on the apparatus for training an image recognition model based on a semantic enhancement according to the third aspect of the present disclosure.

In a fifth aspect of the present disclosure, an electronic device is provided. The electronic device includes one or more processors; and a storage apparatus configured to store one or more programs, where the one or more programs, when executed by the one or more processors, cause the one or more processors to implement the methods according to the first and second aspects of the present disclosure.

In a sixth aspect of the present disclosure, a computer readable storage medium is provided. The computer readable storage medium stores a computer program, where the program, when executed by a processor, implements the methods according to the first and second aspects of the present disclosure.

In a seventh aspect of the present disclosure, a computer program product is provided. The computer program product includes a computer program, where the computer program, when executed by a processor, implements the methods according to the first and second aspects of the present disclosure.

It should be understood that the content described in this part is not intended to identify key or important features of the embodiments of the present disclosure, and is not used to limit the scope of the present disclosure. Other features of the present disclosure will be easily understood through the following description.

## BRIEF DESCRIPTION OF THE DRAWINGS

In combination with the accompanying drawings and with reference to the following description, the above and other features, advantages and aspects of the embodiments of the present disclosure will be more apparent. In the accompanying drawings, the same or similar reference numerals denote the same or similar elements. Here:

Fig. 1 is a schematic diagram of a system for training an image recognition model based on a semantic enhancement, in which a plurality of embodiments of the present disclosure may be applied;

Fig. 2 is a flowchart of a method for training an image recognition model based on a semantic enhancement, in which a plurality of embodiments of the present disclosure may be applied;

Fig. 3 is an architecture of training an image recognition model based on a semantic enhancement according to some embodiments of the present disclosure;

Fig. 4 is a flowchart of a method for recognizing an image according to some embodiments of the present disclosure;

Fig. 5 is a block diagram of an apparatus for training an image recognition model based on a semantic enhancement according to some embodiments of the present disclosure;

Fig. 6 is a block diagram of an apparatus for recognizing an image according to some embodiments of the present disclosure; and

Fig. 7 is a block diagram of a computing device capable of implementing a plurality of embodiments of the present disclosure.

## DETAILED DESCRIPTION OF EMBODIMENTS

Embodiments of the present disclosure will be described in more detail below with reference to the accompanying drawings. Even though some embodiments of the present disclosure are shown in the accompanying drawings, it should be understood that the present disclosure may be embodied in various forms and should not be construed as being limited to the embodiments set forth herein, and on the contrary, these embodiments are provided for a more thorough and complete understanding of the present disclosure. It should be understood that the accompanying drawings and embodiments of the present disclosure are merely for the purpose of illustration, rather than a limitation to the scope of protection of the present disclosure.

In the description for the embodiments of the present disclosure, the term "include" and similar terms should be understood as open-ended inclusion, i.e., "including but not limited to." The term "based on" should be understood as "based at least in part on." The term "an embodiment" or "this embodiment" should be understood as "at least one embodiment." The terms "first," "second," etc. may refer to different or the same objects. Other explicit and implicit definitions may further be included below.

In image-based model training, a feasible scheme is a supervised training approach utilizing sample images having annotation information, in which feature representations in a large number of images are extracted and generalized and associations between the feature representations and the annotation information are established. However, the supervised training approach relies on a large amount of annotated data, and the image annotation requires a lot of time, which makes these data expensive and difficult to obtain.

Another feasible scheme is an unsupervised training approach utilizing unannotated sample images, which can obtain a relatively satisfactory result at a relatively low marking cost. For example, in self-supervised training based on contrastive learning, enhanced image pairs are generated through a simple enhancement on the unannotated sample images, and the training is performed by comparing and generalizing the enhanced image pairs. However, the feature representations obtained by training in this way are lack of relevant semantic information, resulting in a poor effect in processing a task such as an image classification or an object detection.

In order to solve one or more technical problems in the existing technology, according to example embodiments of the present disclosure, a scheme of training an image recognition model based on a semantic enhancement is proposed. Specifically, from an inputted first image that is unannotated and has no textual description, a first feature representation of the first image is extracted, to calculate a first loss function. From an inputted second image that is unannotated and has an original textual description, a second feature representation of the second image is extracted, to calculate a second loss function. Then, based on a fusion of the first loss function and the second loss function, an image recognition model is trained.

According to the embodiments of the present disclosure, the model is trained using both unannotated sample images and sample images with a textual description, thereby achieving a semantic enhancement with respect to the way in which the training is performed using only the unannotated sample images. In this way, an unannotated image and a corresponding textual description are associated with each other, thereby obtaining a feature representation with semantic information. Such feature representation with the semantic information has better effects in processing a downstream task (e.g., an image classification or an object detection). At the same time, the requirements for the annotation on the image are reduced, thereby overcoming the problems of high costs and difficulty in obtaining the annotation data.

The embodiments of the present disclosure will be described in detail below with reference to the accompanying drawings.

Fig. 1 illustrates a schematic diagram of a system 100 for training an image recognition model based on a semantic enhancement, in which a plurality of embodiments of the present disclosure can be implemented. In the system 100, a computing device 110 is configured to train an image recognition model 140 using a large number of images, to obtain a trained image recognition model. The image recognition model 140 may be constructed, for example, to classify an image or to detect an object, etc. In the present disclosure, the images for the training includes two types, i.e., an unannotated image and an image with a textual description. For ease of description, the unannotated image is referred to as a first image 120, and the image with the textual description is referred to as a second image 130.

The computing device 110 may be configured with appropriate software and hardware to implement image recognition. The computing device 110 maybe any type of server device, mobile device, fixed device, or portable device, which include a server, a mainframe, a computing node, an edge node, a mobile phone, an Internet node, a communicator, a desktop computer, a laptop computer, a notebook computer, a netbook computer, a tablet computer, a personal communication system (PCS) device, a multimedia computer, a multimedia tablet or any combination thereof, including accessories and peripherals of these devices or any combination thereof.

Different images 120 and 130 may include different objects. Herein, an "object" may refer to any person or item. For example, in the shown schematic diagram, the first image 120 includes a pedestrian 122 and a vehicle 124, and the second image 130 includes a pedestrian 132, a vehicle 134, and an associated textual description 136. Herein, a "textual description" may be a word or a combination of words, or may be a sentence or sentences. In addition, the "textual description" is not limited by language. For example, the "textual description" may be in Chinese or English, or may include a letter or symbol.

The image recognition model 140 maybe constructed based on a machine learning algorithm, e.g., may be constructed to include one or more types of neural networks or other deep learning networks. The specific configuration of the image recognition model 140 and the employed machine learning algorithm are not limited in the present disclosure. In order to obtain an image recognition capability, it is required to perform a training process using the training images 120 and 130, to determine the values of a parameter set of the image recognition model 140. The image recognition model 140 whose values of the parameter set are determined is referred to as the trained image recognition model 140.

The performance of the image recognition model 140 obtained through the training depends largely on a set of training data. Only if the training data covers a variety of possible changing conditions, the image recognition model is more likely to learn the capability to extract feature representations under these conditions when being trained, and the values of the parameter set are more accurate. Thus, it is noted in the present disclosure that, in order to balance the training effects and the sample acquisition costs, it would be advantageous to train a model using both the unannotated images and the images with the textual description.

Fig. 2 illustrates a flowchart of a method 200 for training an image recognition model based on a semantic enhancement according to some embodiments of the present disclosure. The method 200 may be implemented by the computing device 110 in Fig. 1.

At block 202, the computing device 110 extracts, from an inputted first image that is unannotated and has no textual description, a first feature representation of the first image. The first feature representation may be, for example, the pedestrian 122 and the vehicle 124 that are included in the image 120. However, since the image 120 is not annotated, the pedestrian 122 and the vehicle 124 do not have a corresponding textual description.

In some embodiments, extracting the first feature representation of the first image may include: first, generating an enhanced image pair of the first image through an image enhancement, and then extracting feature representations from the enhanced images in the enhanced image pair, respectively. Herein, the "enhanced image pair" represents two enhanced images generated in different enhancement approaches based on one original image. The enhancement approaches include, for example, processing and smoothing an attribute of the image such as a gray scale, brightness, and a contrast, thereby improving the definition of the image.

At block 204, the computing device 110 calculates a first loss function based on the extracted first feature representation.

In some embodiments, calculating the first loss function may include: calculating the first loss function based on the feature representations extracted from the enhanced image pair.

At block 206, the computing device 110 extracts, from an inputted second image that is unannotated and has an original textual description, a second feature representation of the second image. Such an image that is unannotated and has an original textual description can be obtained, for example, by data mining, and thus, there is no need for a manual annotation. For example, the second feature representation may be the pedestrian 132 and the vehicle 134 in the image 130, and the original textual description may be the description 136 corresponding to the image 130, that is, "the pedestrian passing by the vehicle parked on the roadside."

At block 208, the computing device 110 calculates a second loss function based on the extracted second feature representation.

In some embodiments, calculating the second loss function may include: first, generating a predicted textual description from the second feature representation of the second image, and then calculating the second loss function based on the predicted textual description and the original textual description. For example, the predicted textual description may be obtained using an image-language translator. In the situation as shown in Fig. 1, such a "predicted textual description" may be a term such as "person", "pedestrian", "passer-by", "car", "vehicle", "motor vehicle" and a combination thereof, or the predicted textual description may be a short sentence such as "a person and a vehicle", "a person is beside a vehicle" and "a person passes by a vehicle", or the predicted textual description may be an expression having a modifier such as "a walking person and a stopped vehicle." For example, the similarity between the predicted textual description and the original textual description maybe evaluated based on various algorithms, to calculate the second loss function.

At block 210, the computing device 110 trains an image recognition model based on a fusion of the first loss function and the second loss function. The "fusion" may be, for example, a linear combination of the two functions.

In some embodiments, the fusion of the first loss function and the second loss function may be superimposing the first loss function and the second loss function with a specified weight. The weights of the two loss functions may be the same or different.

Fig. 3 illustrates an architecture 300 of training an image recognition model based on a semantic enhancement, in which a plurality of embodiments of the present disclosure can be implemented. The architecture 300 includes a self-supervised training branch based on unannotated images and a language-supervised training branch based on images having a textual description. In an embodiment of the present disclosure, heterogeneous visual training is implemented through the fusion of the self-supervised training branch and the language-supervised training branch, and finally, a visual feature representation with high-level semantic information can be obtained.

In the self-supervised training branch on the left side of Fig. 3, a data set composed of a large number of unannotated images 310 is inputted. For each image in the data set, two enhanced images 320 and 322 are generated through an image enhancement. The enhanced images 320 and 322 are then inputted into a feature extractor, and visual feature representations 330 and 332 are respectively extracted. The feature representations from a given unannotated image in a plurality of unannotated images 310 are defined as a positive sample pair, and the feature representations from different unannotated images in the plurality of unannotated images 310 are defined as a negative sample pair.

In some embodiments, for the feature extraction portion, the feature extraction of the image may be implemented using a model based on a convolutional neural network (CNN). In the CNN-based model, a hidden layer generally includes one or more convolutional layers for performing a convolutional operation on an input. In addition to the convolutional layers, the hidden layer in the CNN-based model may further include one or more activation layers for performing non-linear mapping on the input using an activation function. Common activation functions include, for example, a rectified linear unit (ReLu), and a tanh function. In some models, there is a connected activation layer after the one or more convolutional layers. In addition, the hidden layer in the CNN-based model may further include a pooling layer for compressing the amount of data and the number of parameters to reduce over-fitting. The pooling layer may include a max pooling layer, an average pooling layer, and the like. The pooling layer may be connected between successive convolutional layers. In addition, the CNN-based model may further include a fully connected layer, and the fully connected layer may generally be disposed upstream of the output layer.

The CNN-based model is well known in the field of deep learning, and thus will not be repeatedly described here. In different models, the numbers of convolutional layers, activation layers, and/or pooling layers, the number and configuration of processing units in each layer, and the interconnection relationship between the layers may vary. In some examples, the feature extraction of the image may be implemented using a CNN structure such as ResNet-50, inception_v3 and GoogleNet. Clearly, it should be appreciated that various CNN structures that have been used or will be developed in the future may be used to extract the feature representation of the image. The scope of the embodiments of the present disclosure is not limited in this respect.

In some embodiments, the image recognition model may be implemented using a recurrent neural network (RNN)-based model. In the RNN-based model, the output of a hidden layer is related not only to the input but also to a previous output of the hidden layer. The RNN-based model has a memory function, and thus is capable of remembering the previous output of the model (at a previous moment), and performing a feedback for generating an output at the current moment together with a current input. The intermediate output of the hidden layer is sometimes alternatively referred to as an intermediate state or intermediate processing result. Accordingly, the final output of the hidden layer can be considered as a processing result of the sum of the current input and the past memories. The processing unit that may be employed in the RNN-based model includes, for example, a long-short term memory (LSTM) unit, and a gate recurrent unit (GRU). The RNN-based model is well known in the field of deep learning, and thus will not be repeatedly described here. By selecting different recurrent algorithms, the RNN-based model may have different deformations. It should be appreciated that various RNN structures that have been used or will be developed in the future can be used in the embodiments of the present disclosure.

Based on the positive and negative sample pairs from the plurality of unannotated images 310, a first loss function (also referred to as a contrastive loss function) of the self-supervised training branch may be calculated. For example, InfoNCE may be used as the contrastive loss function:

$$\mathcal{L}_c = -\frac{1}{K}\sum_{i=1}^{K}\left(\log\frac{\exp(\mathbf{f}_i^1 \cdot \mathbf{f}_i^2/\tau)}{\sum_{k=1}^{K}\sum_{x=1}^{2}\sum_{y=1}^{2} I_{[k\neq i]}\exp(\mathbf{f}_i^x \cdot \mathbf{f}_k^y/\tau)}\right),$$

Equation 1

Here, I[k≠i] represents an evaluation index function, which is 1 when k is not equal to i and which is o when k is equal to I; K represents the total number of unannotated images in a training data set; $I_i^1$ and $I_i^2$ represent two enhanced images obtained by performing an image enhancement on any unannotated image $I_i$ in the training data set; $f_i^1$ and $f_i^2$ represent feature representations extracted from $I_i^1$ and $I_i^2$ respectively, which are defined as a positive sample pair; $I_k^1$ and $I_k^2$ represent two enhanced images obtained by performing an image enhancement on an other unannotated image $I_k$ in the training data set; $f_k^1$ and $f_k^2$ represent feature representations extracted from $I_k^1$ and $I_k^2$ respectively, and feature representations $f_i^x$ and $f_k^y$ from different images are defined as a negative sample pair; and $\tau$ represents a temperature parameter, and when $\tau$ decreases, an original difference value is amplified, and thus the difference value becomes clearer and more obvious.

In the language-supervised training branch on the right side of Fig. 3, a data set composed of a large number of images 312 having an original textual description is inputted, an image 312 including an image part 324 and a textual description part 326. The textual description of the image 312 does not need to be manually annotated, but can be acquired from the network through data mining. Such textual description may provide more abundant semantic information associated with the image, and are easier to collect than the category tag and bounding box annotation of the image. The feature extractor extracts a feature representation 334 from the image part 324 of the image 312.

Then, the feature representation 334 is inputted into an image-language translator to obtain a predicted textual description 340. Specifically, the translator may utilize an attention-based mechanism to aggregate spatially weighted context vectors in each time step, and utilize an RNN decoder to calculate an attention weight between a previous decoder state and a visual feature of each spatial location. A newest context vector is obtained by summing weighted two-dimensional features to generate a newest decoder state and predicted word.

For example, when the ResNet-50 is used as a model structure, the probability of a predicted word is outputted through the soft-max of each step. As shown in Fig. 3, taking a visual feature representation 334 $g_i$ as an input, a spatial feature is transformed into a word sequence $y=\{y_t\}_{t=1}^T$ using the attention-based mechanism. Here, $y_t$ and T are the lengths of an embedded word and a sentence y respectively. In the decoding process of the time step t, a hidden state $h_t$ is updated using attention mechanism and the RNN decoder, and a word $y_t$ is predicted by giving $y_{t-1}$ as an input. Then, the probability of $y_t$ being outputted is calculated using the fully connected layer and the soft-max loss function. The second loss function (also referred to as supervised loss function Ls) of the image-to-language translation may be defined as:

$$L_s = -\frac{1}{T}\sum_{t=1}^{T} \log p(\mathbf{y}_t|\mathbf{y}_{t-1}, \mathbf{h}_{t-1}, \mathbf{c}_t),$$

Equation 2

Here, $c_t$ represents a context vector in a time step t, which is calculated by the attention mechanism; $g_i$ represents a visual feature representation extracted from the image part 224 of the image 212; $y_t$ represents the length of an embedded word; T represents the length of a sentence y; and $h_t$ represents a hidden state in the decoding process of the time step t. Here, the word $y_t$ associated with the image part 224 is predicted in the situation where $y_{t-1}$ is given as an input.

Finally, in order to train the two branches in an end-to-end mode, in the embodiments of the present disclosure, the loss functions of the two training branches are fused. For example, the final loss function of the entire visual training framework may be defined as:

$$L_{final} = L_c + \alpha L_s,$$

Equation 3

Here, $\alpha$ represents a parameter used to fuse the contrastive loss Lc of the self-supervised training branch and the supervised loss Ls of the language-supervised training branch.

According to the embodiments of the present disclosure, the training is performed using both the unannotated images and the images having the textual description, to obtain a feature representation with semantic information, thus achieving a semantic enhancement with respect to the way in which the training is performed using only the unannotated images. Due to the diversity of types of training images, the trained image recognition model has higher robustness and better performance. Such model may also associate feature representations with specific semantic information to more accurately perform image processing tasks in various scenarios.

It should be understood that the above equations and model types used to describe the model architecture in the present disclosure are all exemplary, the definitions of the loss functions may have other variations, and the scope of the embodiments of the present disclosure is not limited in this respect.

Fig. 4 is a flowchart of a method 400 for recognizing an image according to some embodiments of the present disclosure. The method 400 may also be implemented by the computing device 110 in Fig. 1.

At block 402, the computing device 110 acquires a to-be-recognized image. At block 404, the computing device 110 recognizes the to-be-recognized image based on an image recognition model. Here, the image recognition model is obtained based on the training method 200.

Fig. 5 is a block diagram of an apparatus 500 for training an image recognition model based on a semantic enhancement according to some embodiments of the present disclosure. The apparatus 500 maybe included in or implemented as the computing device 110 in Fig. 1.

As shown in Fig. 5, the apparatus 500 includes: a first feature extracting module 502, configured to extract, from an inputted first image being unannotated and having no textual description, a first feature representation of the first image. The apparatus 500 further includes: a first calculating module 504, configured to calculate a first loss function based on the first feature representation. The apparatus 500 further includes: a second feature extracting module 506, configured to extract, from an inputted second image being unannotated and having an original textual description, a second feature representation of the second image. The apparatus 500 further includes: a second calculating module 508, configured to calculate a second loss function based on the second feature representation. The apparatus 500 further includes: a fusion training module, configured to train an image recognition model based on a fusion of the first loss function and the second loss function.

In some embodiments, the fusion training module may be further configured to: superimpose the first loss function and the second loss function with a specified weight.

In some embodiments, the first feature extracting module may be further configured to: generate an enhanced image pair of the first image through an image enhancement, and extract feature representations from the enhanced image pair respectively.

In some embodiments, the first calculating module may be further configured to: calculate the first loss function based on the feature representations extracted from the enhanced image pair.

In some embodiments, the second calculating module may be further configured to: generate a predicted textual description from the second feature representation of the second image; and calculate the second loss function based on the predicted textual description and the original textual description.

Fig. 6 is a block diagram of an apparatus 600 for recognizing an image according to some embodiments of the present disclosure. The apparatus 600 may be included in or implemented as the computing device 110 in Fig. 1.

As shown in Fig. 6, the apparatus 600 includes: an image acquiring module 602, configured to acquire a to-be-recognized image. The apparatus 600 may further include: an image recognizing module 604, configured to recognize the to-be-recognized image based on an image recognition model. Here, the image recognition model is obtained based on the apparatus 500.

Fig. 7 shows a schematic block diagram of an example device 700 that may be configured to implement embodiments of the present disclosure. The device 700 may be used to implement the computing device 110 in Fig. 1. As shown in Fig. 7, the device 700 includes a computing unit 701, which may execute various appropriate actions and processes in accordance with computer program instructions stored in a read-only memory (ROM) 702 or computer program instructions loaded into a random access memory (RAM) 703 from a storage unit 708. The RAM 703 may further store various programs and data required by operations of the device 700. The computing unit 701, the ROM 702, and the RAM 703 are connected to each other through a bus 704. An input/output (I/O) interface 705 is also connected to the bus 704.

A plurality of components in the device 700 is connected to the I/O interface 705, including: an input unit 706, such as a keyboard and a mouse; an output unit 707, such as various types of displays and speakers; a storage unit 708, such as a magnetic disk and an optical disk; and a communication unit 709, such as a network card, a modem, and a wireless communication transceiver. The communication unit 709 allows the device 700 to exchange information/data with other devices through a computer network such as the Internet and/or various telecommunication networks.

The computing unit 701 may be various general purpose and/or specific purpose processing components having a processing capability and a computing capability. Some examples of the computing unit 701 include, but are not limited to, a central processing unit (CPU), a graphics processing unit (GPU), various specific purpose artificial intelligence (AI) computing chips, various computing units running a machine learning model algorithm, a digital signal processor (DSP), and any appropriate processor, controller, micro-controller, and the like. The computing unit 701 executes various methods and processes described above, such as the method 500. For example, in some embodiments, the method 500 may be implemented as a computer software program that is tangibly included in a machine readable medium, such as the storage unit 708. In some embodiments, some or all of the computer programs may be loaded and/or installed onto the device 700 via the ROM 702 and/or the communication unit 709. When the computer program is loaded into the RAM 703 and executed by the computing unit 701, one or more steps of the method 500 described above may be executed. Alternatively, in other embodiments, the computing unit 701 may be configured to execute the method 500 by any other appropriate approach (e.g., by means of firmware).

The functions described herein above may be performed, at least in part, by one or more hardware logic components. For example, without limitation, exemplary types of hardware logic components that may be used include: a field programmable gate array (FPGA), an application specific integrated circuit (ASIC), an application specific standard product (ASSP), a system on a chip (SOC), a complex programmable logic device (CPLD) and the like.

Program codes for implementing the method of the present disclosure may be compiled using any combination of one or more programming languages. The program codes may be provided to a processor or controller of a general purpose computer, a specific purpose computer, or other programmable data processing apparatuses, such that the program codes, when executed by the processor or controller, cause the functions/operations specified in the flowcharts and/or block diagrams to be implemented. The program codes may be completely executed on a machine, partially executed on a machine, partially executed on a machine and partially executed on a remote machine as a separate software package, or completely executed on a remote machine or server.

In the context of the present disclosure, a machine readable medium may be a tangible medium which may contain or store a program for use by, or used in combination with, an instruction execution system, apparatus or device. The machine readable medium may be a machine readable signal medium or a machine readable storage medium. The computer readable medium may include, but is not limited to, electronic, magnetic, optical, electromagnetic, infrared, or semiconductor systems, apparatuses, or devices, or any appropriate combination of the above. A more specific example of the machine readable storage medium will include an electrical connection based on one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any appropriate combination of the above.

Furthermore, although operations are depicted in a particular order, this should be understood to require that such operations are performed in a particular order or in a sequential order, or that all illustrated operations should be performed, so as to achieve desired results. Under certain circumstances, multitasking and parallel processing may be advantageous. Likewise, although the above discussion contains several implementation-specific details, these should not be construed as limitations on the scope of the present disclosure. Certain features that are described in the context of separate embodiments can also be implemented in combination in a single implementation. Conversely, various features that are described in the context of a single implementation can also be implemented in multiple implementations separately or in any suitable sub-combination.

Although the subject matter has been described in language specific to structural features and/or methodological logical acts, it should be understood that the subject matter defined in the appended claims is not necessarily limited to the specific features or acts described above. Rather, the specific features and acts described above are merely exemplary forms of implementing the claims.

## Claims

**1.** A method for training an image recognition model based on a semantic enhancement, comprising:

extracting (202), from an inputted first image being unannotated and having no textual description, a first feature representation of the first image;
calculating (204) a first loss function based on the first feature representation;
extracting (206), from an inputted second image being unannotated and having an original textual description, a second feature representation of the second image;
calculating (208) a second loss function based on the second feature representation; and
training (210) an image recognition model based on a fusion of the first loss function and the second loss function.

**2.** The method according to claim 1, wherein the fusion of the first loss function and the second loss function comprises: superimposing the first loss function and the second loss function with a specified weight.

**3.** The method according to claim 1 or 2, wherein extracting the first feature representation of the first image comprises:

generating an enhanced image pair of the first image through an image enhancement, and
extracting feature representations from the enhanced image pair, respectively.

**4.** The method according to claim 3, wherein the calculating a first loss function comprises:
calculating the first loss function based on the feature representations extracted from the enhanced image pair.

**5.** The method according to any one of claims 1-4, wherein the calculating a second loss function comprises:

generating a predicted textual description from the second feature representation of the second image; and
calculating the second loss function based on the predicted textual description and the original textual description.

**6.** A method for recognizing an image, comprising:

acquiring (402) a to-be-recognized image; and
recognizing (404) the to-be-recognized image based on an image recognition model,
wherein the image recognition model is obtained based on the method according to any one of claims 1-5.

**7.** An apparatus for training an image recognition model based on a semantic enhancement, comprising:

a first feature extracting module (502), configured to extract, from an inputted first image being unannotated and having no textual description, a first feature representation of the first image;
a first calculating module (504), configured to calculate a first loss function based on the first feature representation;
a second feature extracting module (506), configured to extract, from an inputted second image being unannotated and having an original textual description, a second feature representation of the second image;
a second calculating module (508), configured to calculate a second loss function based on the second feature representation; and
a fusion training module (510), configured to train an image recognition model based on a fusion of the first loss function and the second loss function.

**8.** The apparatus according to claim 7, wherein the fusion training module is further configured to:

superimpose the first loss function and the second loss function with a specified weight.

**9.** The apparatus according to claim 7 or 8, wherein the first feature extracting module is further configured to: generate an enhanced image pair of the first image through an image enhancement, and extract feature representations from the enhanced image pair, respectively.

**10.** The apparatus according to claim 9, wherein the first calculating module is further configured to: calculate the first loss function based on the feature representations extracted from the enhanced image pair.

**11.** The apparatus according to any one of claims 7-10, wherein the second calculating module is further configured to:

generate a predicted textual description from the second feature representation of the second image; and
calculate the second loss function based on the predicted textual description and the original textual description.

**12.** An apparatus for recognizing an image, comprising:

an image acquiring module (602), configured to acquire a to-be-recognized image; and
an image recognizing module (604), configured to recognize the to-be-recognized image based on an image recognition model,
wherein the image recognition model is obtained based on the apparatus according to any one of claims 7-11.

**13.** An electronic device, comprising:

one or more processors; and
a storage apparatus, configured to store one or more programs, wherein the one or more programs, when executed by the one or more processors, cause the one or more processors to implement the method according to any one of claims 1-6.

**14.** A computer readable storage medium, storing a computer program, wherein the program, when executed by a processor, implements the method according to any one of claims 1-6.

**15.** A computer program product, comprising a computer program, wherein the computer program, when executed by a processor, implements the method according to any one of claims 1-6.

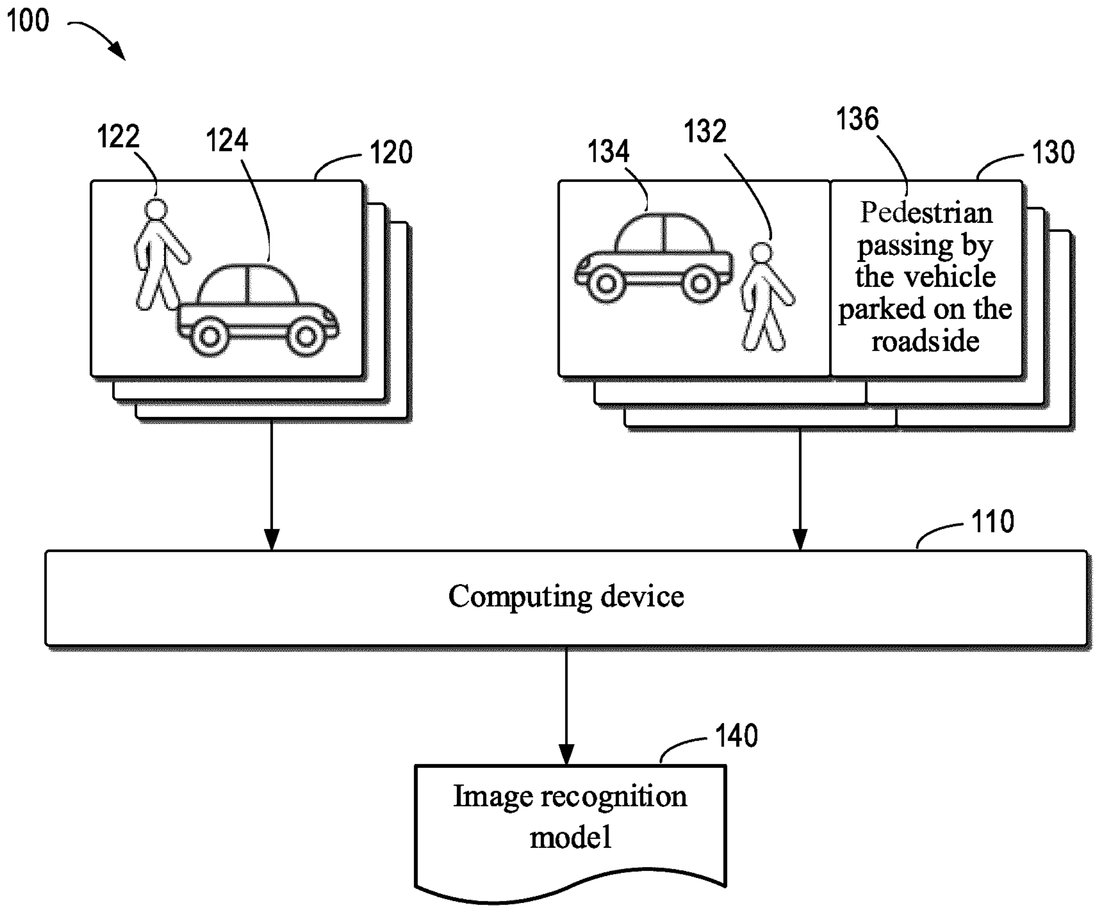
100
122
124
120
134
132
136
130
Pedestrian passing by the vehicle parked on the roadside
110
Computing device
140
Image recognition model

Fig. 1

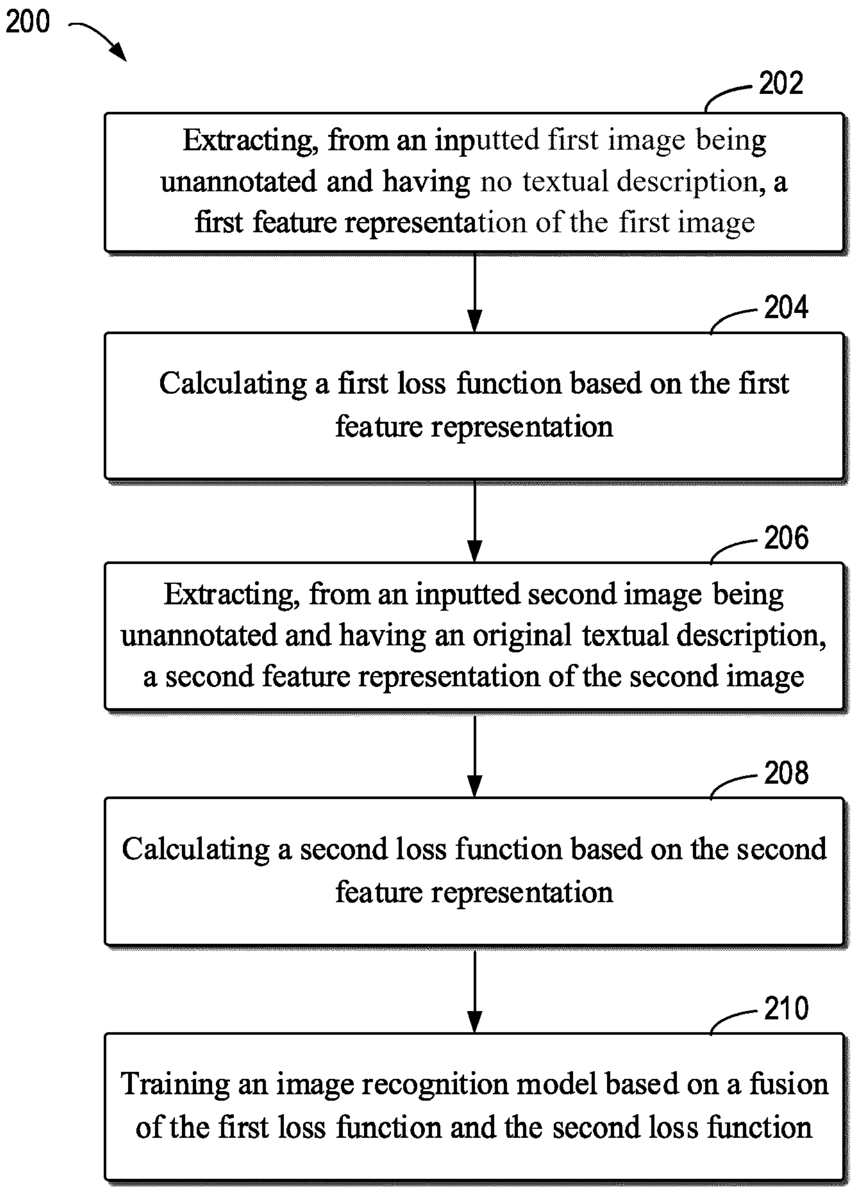
200
202
Extracting, from an inputted first image being unannotated and having no textual description, a first feature representation of the first image
204
Calculating a first loss function based on the first feature representation
206
Extracting, from an inputted second image being unannotated and having an original textual description, a second feature representation of the second image
208
Calculating a second loss function based on the second feature representation
210
Training an image recognition model based on a fusion of the first loss function and the second loss function

Fig. 2

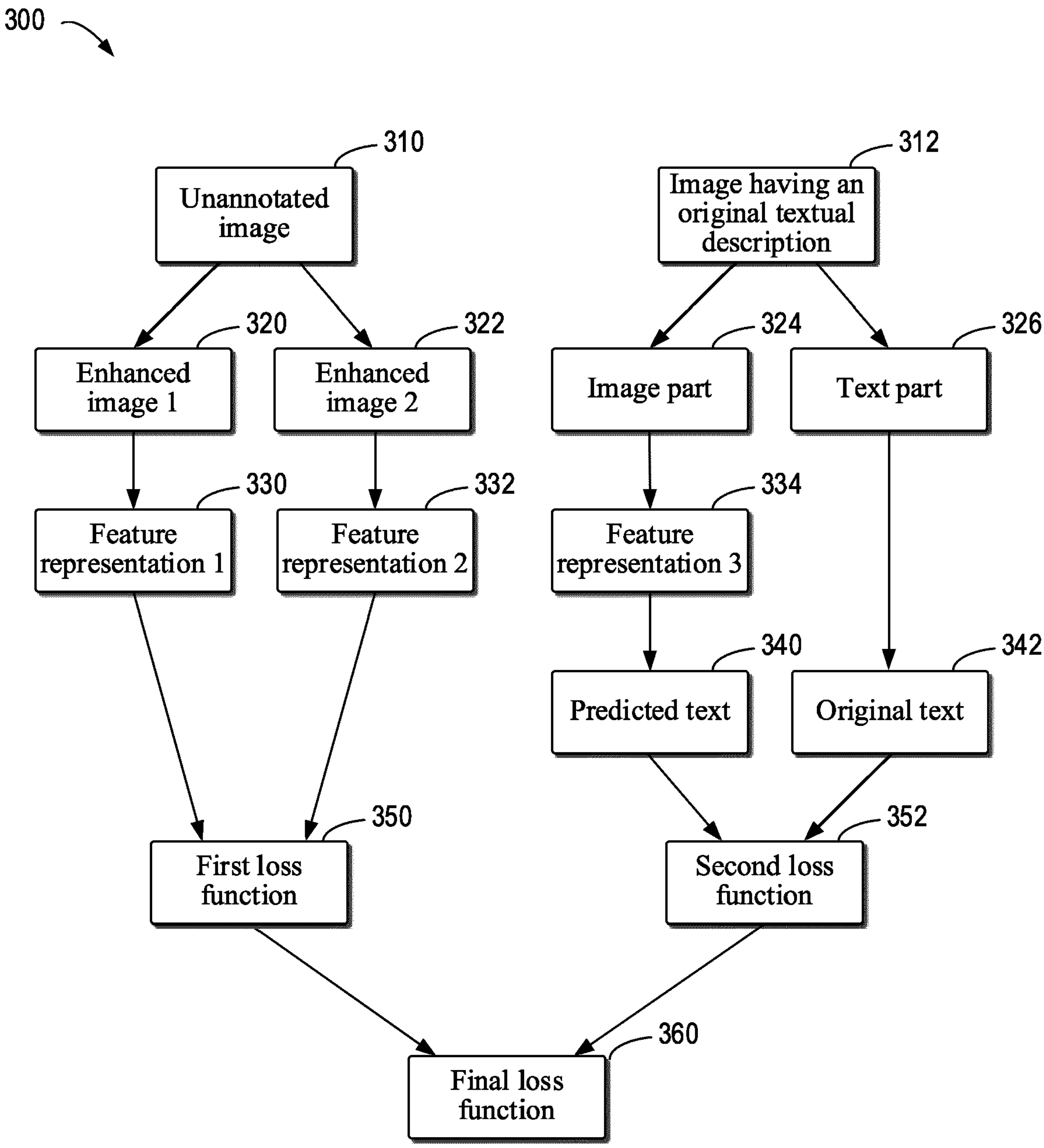
300
310
Unannotated image
312
Image having an original textual description
320
Enhanced image 1
322
Enhanced image 2
324
Image part
326
Text part
330
Feature representation 1
332
Feature representation 2
334
Feature representation 3
340
Predicted text
342
Original text
350
First loss function
352
Second loss function
360
Final loss function

Fig. 3

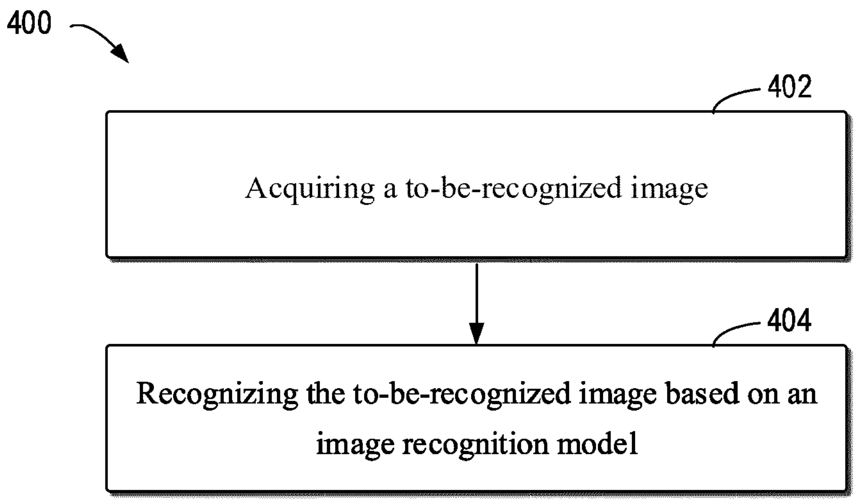
400
402
Acquiring a to-be-recognized image
404
Recognizing the to-be-recognized image based on an image recognition model

Fig. 4

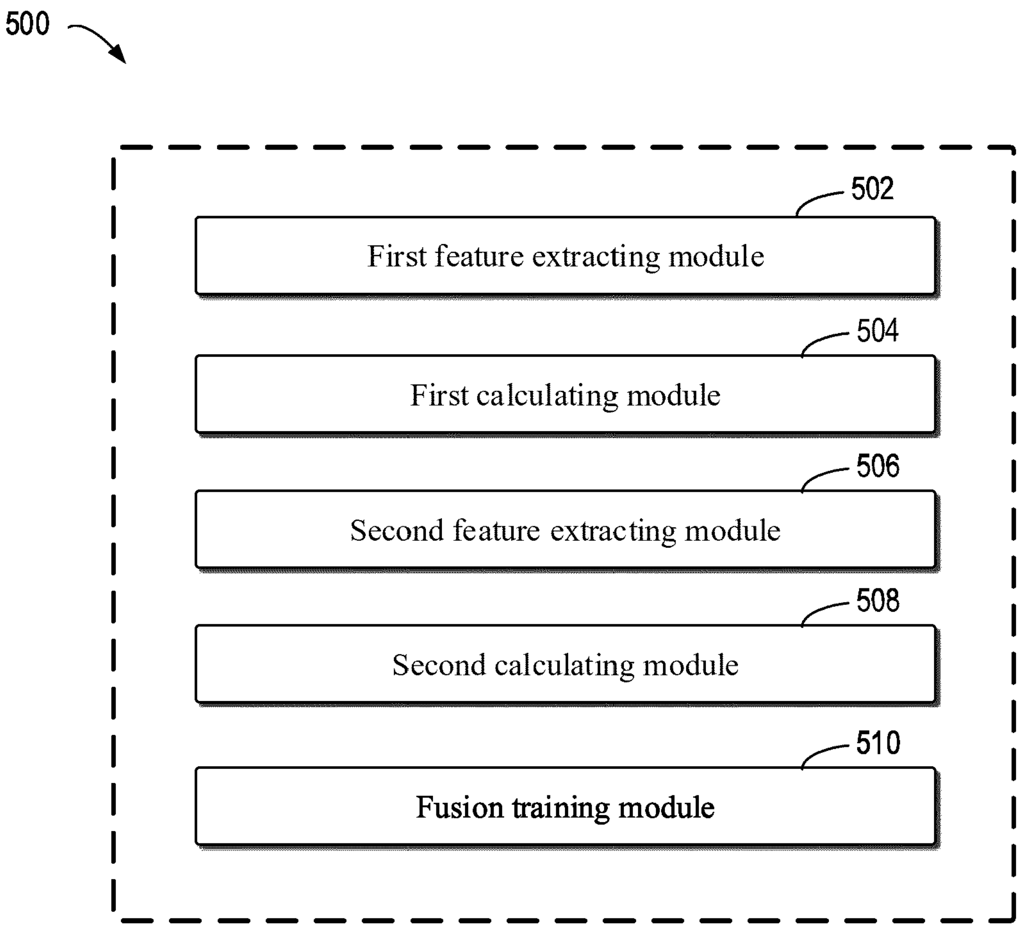
500
502
First feature extracting module
504
First calculating module
506
Second feature extracting module
508
Second calculating module
510
Fusion training module

Fig. 5

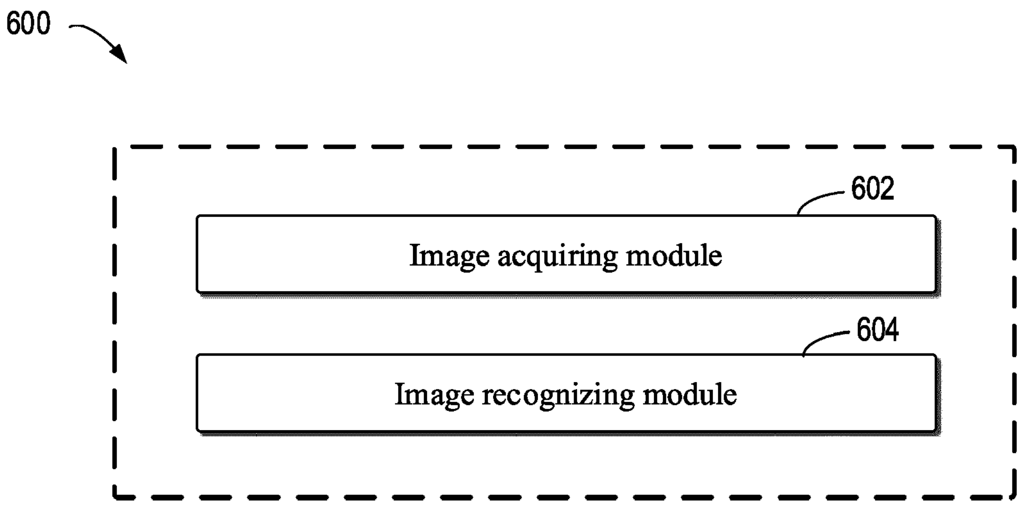
600
602
Image acquiring module
604
Image recognizing module

Fig. 6

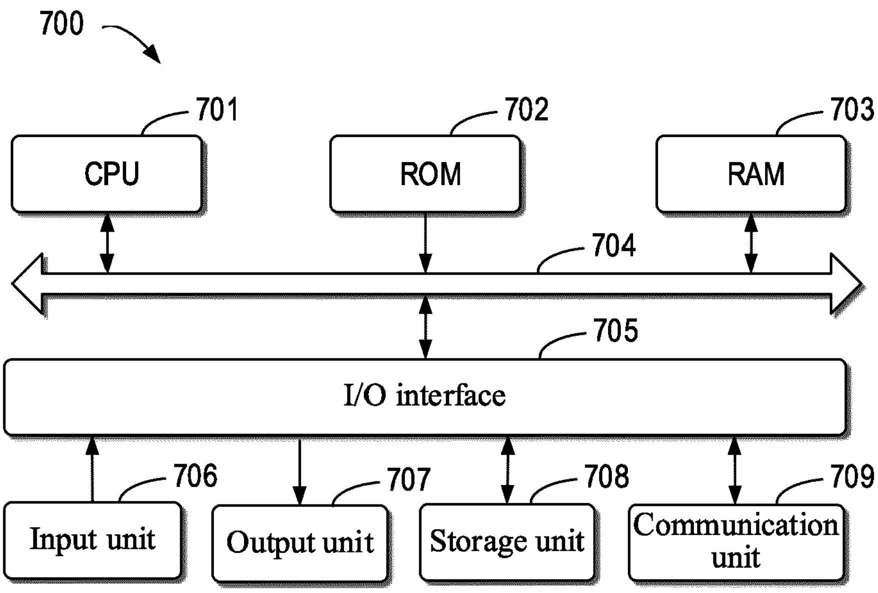
700
701
CPU
702
ROM
703
RAM
704
705
I/O interface
706
Input unit
707
Output unit
708
Storage unit
709
Communication unit

Fig. 7